# EUROPEAN PATENT APPLICATION

(11) **EP 0 963 882 A1**
(43) Date of publication of application: **15.12.1999**
(21) Application number: 99111130.3
(22) Date of filing: 08.06.1999
(51) Int. Cl.: B60R 21/18

(54) **Passenger protective inflatable belt and device**

(30) Priority: 08.06.1998 JP 15929398
(71) Applicant: TAKATA CORPORATION, Shiga 529-1388 (JP)
(72) Inventor: Hideshima, Kei, Echi-gun, Shiga 529-1388 (JP)
(74) Representative: Gramm, Werner, Prof. Dipl.-Ing.

(57) **Abstract**

An inflatable belt (2B) has an envelope-like belt body (10) and a knit cover (12), which is made from a textile fabric and encloses the belt body (10). The belt body (10) is formed such that the parts corresponding to the chest and abdomen of a passenger in a seat arc wider than the other parts. The wider part is then folded such that the belt body (10) is formed in a long band-like configuration. The knit cover (12) is knitted such that it can stretch in a supple fashion in its width direction, but is hard to stretch in the longitudinal direction of the belt. The inflatable belt (2B) comprising the belt body (10) and the knit cover (12) is connected to a webbing (2a) by a seam. The connected portion is covered by a synthetic resin cover (30). This structure provides a passenger protective belt, which has a connected portion between an inflatable belt (2B) and a webbing (2a), that softly fits the contours of a passengers body.

## Description

### Background of the Invention

### Field of the Invention

The present invention relates to a belt and a device for protecting a vehicle passenger during a vehicle collision and, more particularly, to a passenger protective belt and device having an inflatable belt to be inflated with gas from a gas generator.

### Description of the Related Art

An inflatable belt device of this type is disclosed in Japanese Unexamined Patent Publication H05-85301 and is shown in Figures 6(a) and 6(b). This passenger protective device 1 includes a shoulder belt 2 extending diagonally from the right side to the left side of a passenger, a lap belt 3 extending from the right side to the left side of the passenger, a buckle 4 fixed to, for example, a vehicle floor, a tongue 5 to be inserted into and engaged with the buckle 4 when the passenger wears the belt, and an intermediate guide 6 for guiding the shoulder belt 2.

The shoulder belt 2 includes a webbing 2a, which is the same as a typical conventional seat belt, and an inflatable belt 2b connected to an end of the webbing 2a. The webbing 2a is slidably hung in the intermediate guide 6. The other end of the webbing 2a is connected to a shoulder belt retractor 7 with an emergency locking mechanism (ELR), which is fixed to the vehicle body. The webbing 2a is arranged such that it is wound into the shoulder belt retractor 7.

The inflatable belt 2b is positioned so that it contacts the passenger and is connected to the tongue 5 at an end opposite to the end connected to the webbing 2a. The lap belt 3 is composed of a webbing, which is the same as a typical conventional seat belt, having one end is connected to the tongue 5 and the other end connected to a lap belt retractor 8 (ELR), which is fixed to the vehicle body. A gas generator 9 is connected to the buckle 4. The gas generator 9 is actuated in emergency situations, e.g., vehicle collisions, to generate high-pressure gas. The tongue 5 and the buckle 4 are each provided with passages for introducing gas from the gas generator 9 into the inflatable belt 2b.

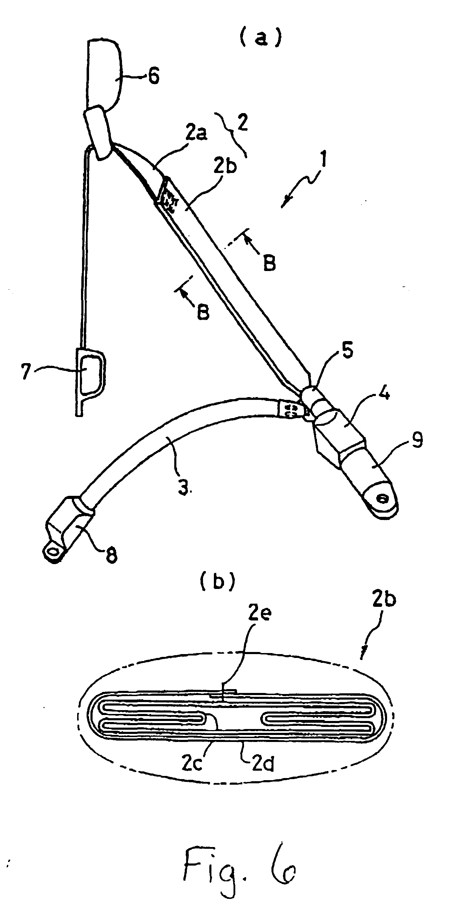

The inflatable belt 2b of the shoulder belt 2 includes a belt body 2c formed in an envelope-like shape and a cover 2d. The belt body 2c is folded, shown in solid lines in Figure 6(b), and then covered by the cover 2d. The ends of the cover 20 are then connected to each other by stitching 2e so that the inflatable belt 2b is maintained in a band-like configuration. The stitching 2e of the cover 2d is easily torn by the force of the shoulder belt 2 expanding when the gas generator 9 is actuated so that the inflatable belt 2b is deployed, shown by a two-dot chain line in Figure 6(b).

The area of the shoulder belt where the webbing is connected to the end of the inflatable belt has a poor feeling when contacted by an occupant. This poor feeling results from the stitching at the sewn connected portion.

These difficulties or problems with the current alternatives are not intended to be exhaustive, but are many which tend to reduce the desirability of known seat belts. Other notable problems may exist; those presented above, however, should be sufficient to demonstrate that devices appearing in the past are amenable to worthwhile improvement.

### Summary of the Invention

Accordingly, it is a general object of the invention to provide a seat belt device that obviates or minimizes the aforementioned problems or drawbacks of known devices.

It is a specific object of the present invention to provide a passenger protective belt and a device having improved feeling at the portion where the inflatable belt is connected to the webbing.

It is another object of the invention to provide a passenger protective belt and a device in which the wearing of the stitching at the connecting portion is reduced.

A preferred embodiment, which is intended to accomplish at least some of the above objects, includes an inflatable belt; a webbing connected to the inflatable belt; and a synthetic resin cover covering a connected portion where the inflatable belt and the webbing are connected to each other.

Additional objects and advantages of the invention will be set forth in the following description of the preferred embodiments and, in part, will be obvious from the description or through practicing the invention. The objects and advantages may be realized through the instrumentalities and combinations particularly pointed out in the appended claims.

### Brief Description of the Drawings

The accompanying drawings, which are incorporated in and constitute a part of the specification, illustrate presently preferred embodiments of the invention, and, together with the above general description and the following detailed description, serves to explain the principles of the invention.
Figure 1(a) is a perspective view of a vehicle cabin provided with a passenger protective device according to the invention; and Figure 1(b) is a perspective view of the passenger protective device.
Figure 2(a) is a plan view of an inflatable belt; Figure 2(b) is a plan view of an envelope-like belt body; and Figures 2(c), 2(d), and 2(e) are sectional views of the inflatable belt.
Figure 3(a) is a plan view of the inflatable belt in its inflated state; Figure 3(b) is a plan view of the envelope-like belt body in its inflated state; and Figures 3(c) and 3(d) are sectional views of the inflatable belt in its inflated state.
Figure 4 is a sectional view taken along a line IV-IV of Figure 2(a).
Figure 5 is a perspective view of the passenger protective device showing a cover and an intermediate guide.
Figure 6(a) is a perspective view of a passenger protective device having a conventional inflatable belt; and Figure 6(b) is a sectional view taken along a line B-B of Figure 6(a).

### Detailed Description of the Preferred Embodiments

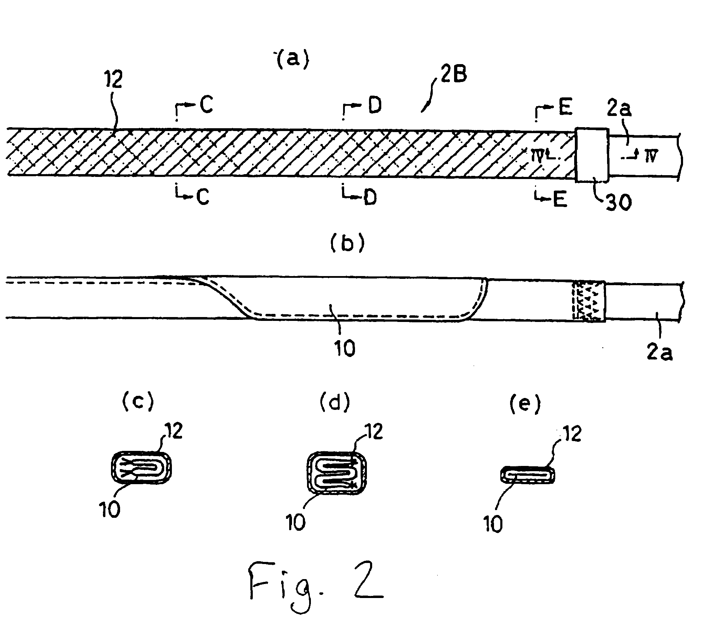

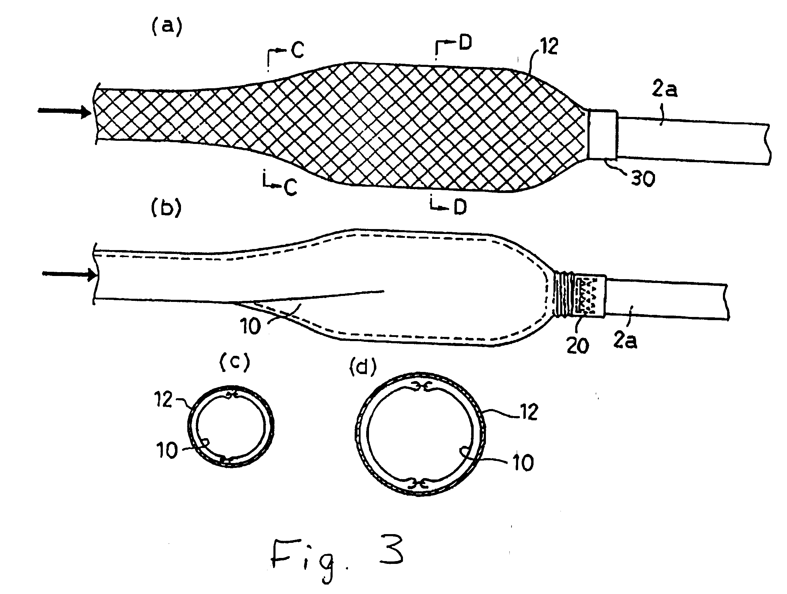

Referring now to the drawings, and initially to Figures 2(a), 2(b), 3(a), 3(b), there will be seen an inflatable belt 2B and a webbing 2a. The inflatable belt 2B has an envelope-like belt body 10 and a cylindrical knit cover 12, which is made of a textile fabric, enclosing the belt body 10. This structure can be seen in cross-section in Figure 4. The belt body 10 is formed such that parts corresponding to the chest and the abdomen of a passenger are wider than the other parts. As shown in Figure 2(b), the wider part is folded such that the belt body 10 forms a long band-like configuration. As shown in Figures 2(c)-2(e), the belt body 10 can be formed in a variety of configurations.

The knit cover 12 is supplely stretchable in its width direction, but is processed by heating and drawing so that it is hard to stretch in the longitudinal direction (withdrawing direction) of the belt.

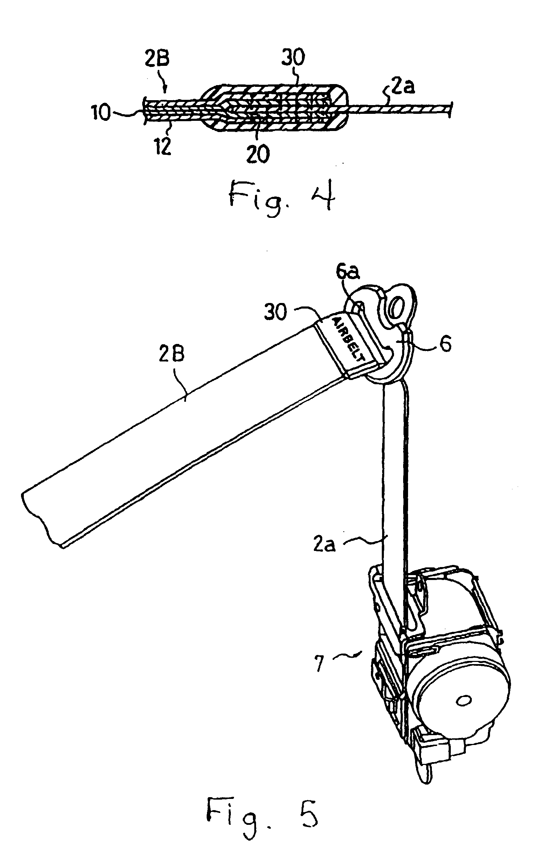

The respective first ends of the belt body 10 and the knit cover 12 of the inflatable belt 2B are connected, via stitching 20, to a webbing 2a. The sewn portion is covered by a synthetic resin cover 30. The synthetic resin cover 30 is formed in a flat plate-like configuration and, as shown in Figure 5, is provided with a mark ("AIRBELT" in this embodiment) on one surface.

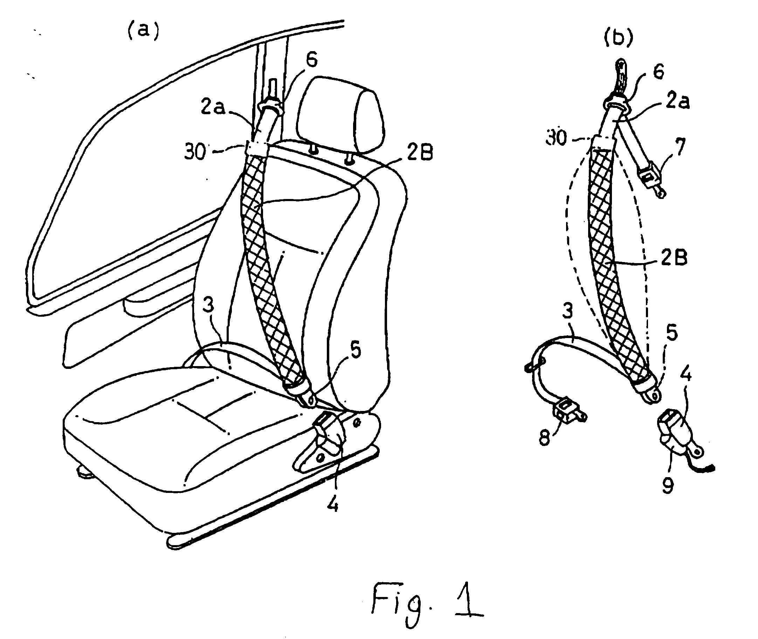

As shown in Figure 1, the other or second ends of the belt body 10 and the knit cover 12 are connected to a tongue 5. A lap belt 3 is also connected to the tongue 5. The remaining structure of the passenger protective device is the same as that shown in Figure 6(a).

As the gas generator 9 is actuated in a state that the tongue 5 is latched to the buckle 4, the inflatable belt 2B is inflated as shown in Figures 3(a)-3(d). Because, as mentioned above, the knit cover 12 is hard to stretch in the longitudinal direction of the belt, the interstices of the knit cover 12 stretch in the width direction when the belt body 10 is inflated. As a result, the knit cover 12 shrinks in the longitudinal direction so that the length of the inflatable belt 2B is shortened.

In the passenger protective belt and device structured as mentioned above, the provision of the cover 30 prevents the seam 20 from coming into direct contact with the passenger, thereby improving the feeling. The yarns for sewing are prevented from wearing. The strength of the connection between the inflatable belt 2B and the webbing 2a is high. In this embodiment, because the cover 30 is formed in the flat plate-like configuration, the cover 30 forms to the passenger's contours very easily.

The mark, as shown in Figure 5, allows the passenger to differentiate between the front and back of the cover and the inflatable belt. As apparent from Fig. 5, the intermediate guide 6 has a belt through-opening 6a dimensioned such that the cover 30 cannot pass through the belt through-opening 6a. Therefore, only the webbing 2a passes through the intermediate guide 6. The inflatable belt 2B is prevented from passing through the intermediate guide 6. As a result, the inflatable belt 2B never slides relative to the intermediate guide 6 and never rubs against the belt through-opening 6a of the intermediate guide 6, thereby improving the durability of the inflatable belt 2B.

A passenger protective belt of the present invention has an inflatable belt and a webbing connected to the inflatable belt. A portion, where the inflatable belt and the webbing are connected to each other, is covered by a synthetic resin cover as shown in Figure 4.

Because the stitches of the sewing are covered by the synthetic resin cover, the passenger protective device feels good when touched. A passenger or an object never directly touches the sewing yarn of the seam, thereby reducing the wearing qualities required of the sewing yarn. The cover also increases the strength of the connection between the inflatable belt and the webbing, thereby reducing the required connecting strength provided by the stitching between the inflatable belt and the webbing.

The cover has a flat plate-like configuration, thus, the cover itself can fit the contours of the passenger. This configuration allows the cover to have a mark (for example, a letter, figure, symbol, color, pattern, convexoconcave, and/or trademark) on one surface so that the "front" and "back" of the cover are clear from a glance or just by touching. To facilitate the discrimination between the front and back of the cover, different marks may be applied on each of the respective surfaces of the cover. The facilitation of the discrimination between the "front" and "back" of the cover helps allows for the manufacturer to differentiate the front of the cover from the back of the cover very easily when installing the inflatable belt in the vehicle.

The passenger protective device of the present invention includes the aforementioned passenger protective belt, and a gas generator, such as an inflator, to inflate the inflatable belt of the passenger protective belt.

In this case, it is preferable that the webbing be passed through a through-opening of an intermediate guide. It is also preferable if the through-opening of the intermediate guide is configured such that the cover cannot pass through the through-opening. With such a structure, only the webbing is held by the intermediate guide and the inflatable belt never passes through the through-opening of the intermediate guide, thereby reducing the wear on the inflatable resulting from bending and wearing due to rubbing against the intermediate guide.

As described in the above, according to the present invention, the connected portion between the inflatable belt and the webbing gives improved feeling when touched. The strength of the connection between the inflatable belt and the webbing can be improved. According to the present invention, the discrimination between the front and back of the inflatable belt can be improved and the durability of the inflatable belt can be improved.

Additional modifications and advantages may readily appear to one skilled in the art. The invention, therefore, is not limited in to the specific details set forth herein. Accordingly, various modifications may be made without departing from the spirit or scope of the invention as defined by the appended claims and their equivalents.

## Claims

1. A safety belt for a vehicle, the belt comprising:
an inflatable belt;
a webbing connected to the inflatable belt; and
a synthetic resin cover covering a connected portion whore the inflatable belt and the webbing are connected to each other.

2. A safety belt as claimed in claim 1, wherein the inflatable belt includes a belt body and a knit cover enclosing the belt body, wherein the belt body and the knit cover are connected to the webbing at the connected portion.

3. A safety belt as claimed in claim 1, wherein the synthetic resin cover has a flat configuration and covers the entirety of the connected portion.

4. A safety belt as claimed in claim 1, wherein the synthetic resin cover has a mark on one surface.

5. A passenger protective belt as claimed in claim 1, wherein the synthetic resin cover has a mark on both surfaces and each mark is different from the other.

6. A safety belt as claimed in claim 1, wherein the inflatable belt is folded such that it is long in a length and narrow in a width.

7. A safety belt as claimed in claim 2, wherein the knit cover is stiff in a longitudinal direction.

8. A safety belt system comprising:
an inflatable belt;
a webbing connected to the inflatable belt;
a synthetic resin cover covering a connected portion where the inflatable belt and the webbing are connected to each other; and
a gas generator for supplying a gas into the inflatable belt to inflate the inflatable belt.

9. A safety belt system as claimed in claim 8, further comprising:
a retractor for winding the webbing; and
an intermediate guide having a through-opening through which the webbing is passed.

10. A safety belt system as claimed in claim 9, wherein the synthetic resin cover cannot pass through the through-opening of the intermediate guide.
